# EUROPEAN PATENT SPECIFICATION

(11) **EP 4 340 061 B1**
(45) Date of publication and mention of the grant of the patent: **02.12.2026**
(21) Application number: 22898831.7
(22) Date of filing: 11.10.2022
(51) Int. Cl.: H01M 4/36, H01M 4/48, H01M 4/62, C01B 33/113, H01M 10/052, H01M 4/02, H01M 4/134, H01M 4/1395, H01M 4/38, H01M 4/58

(54) **NEGATIVE ELECTRODE ACTIVE MATERIAL, METHOD FOR PRODUCING NEGATIVE ELECTRODE ACTIVE MATERIAL, NEGATIVE ELECTRODE SLURRY, NEGATIVE ELECTRODE, AND SECONDARY BATTERY**
NEGATIVELEKTRODENAKTIVMATERIAL, VERFAHREN ZUR HERSTELLUNG EINES NEGATIVELEKTRODENAKTIVMATERIALS, NEGATIVELEKTRODENAUFSCHLÄMMUNG, NEGATIVELEKTRODE UND SEKUNDÄRBATTERIE
MATÉRIAU ACTIF D'ÉLECTRODE NÉGATIVE, PROCÉDÉ DE PRODUCTION DE MATÉRIAU ACTIF D'ÉLECTRODE NÉGATIVE, BOUILLIE D'ÉLECTRODE NÉGATIVE, ÉLECTRODE NÉGATIVE ET BATTERIE SECONDAIRE

(30) Priority: 25.11.2021 KR 20210164669
(43) Date of publication of application: 20.03.2024
(73) Proprietor: LG Energy Solution, Ltd., Seoul 07335 (KR)
(72) Inventor: PARK, Semi, Daejeon 34122 (KR); OH, Ilgeun, Daejeon 34122 (KR); SHIN, Sun Young, Daejeon 34122 (KR); LEE, Yong Ju, Daejeon 34122 (KR); PARK, Heeyeon, Daejeon 34122 (KR); CHOI, Junghyun, Daejeon 34122 (KR)
(74) Representative: Hoffmann Eitle
(86) International application number: PCT/KR2022/015280
(87) International publication number: WO 2023/096148

(56) References cited:
- WO-A1-2021/153074
- JP-A- 2019 204 684
- JP-B2- 6 301 142
- JP-B2- 6 878 967
- KR-A- 20130 045 212
- KR-A- 20190 043 856
- US-B2- 10 490 812

## Description

### [Technical Field]

The present invention relates to a negative electrode active material, a method for preparing a negative electrode active material, a negative electrode slurry and a negative electrode, which include the negative electrode active material, and a secondary battery including the negative electrode.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more. Recently, the demand for secondary batteries as an energy source has been rapidly increasing as the technical development and the demand for portable devices such as portable computers, portable telephones, and cameras increase. Among such secondary batteries, lithium secondary batteries having a high energy density, that is, high capacity have been extensively studied, commercialized and widely used.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used. However, as the need for the performance of lithium secondary batteries is steadily increasing, there is a need for continuous improvement in battery materials including negative electrode active materials.

US 10 490 812 B2 describes a negative electrode for nonaqueous electrolyte secondary batteries which includes SiOₓ. A negative electrode according to an example embodiment includes a negative electrode current collector and a negative electrode mixture layer disposed on the current collector. The negative electrode mixture layer includes SiOₓ (0.5≦x≦1.5) particles having a carbon coating on a particle surface, carbonaceous active material particles, and a compound having at least one of a carboxyl group and a hydroxyl group and having an average number of etherifying agent moieties present per unit molecule of not more than 0.8. The carbon coating includes a first coating disposed on the surface of the SiOₓ and a second coating disposed on the first coating and including carbon having higher crystallinity than the carbon forming the first coating.

WO 2021/153074 A1 describes an electrochemical element that includes a current collector, and an active material layer supported on the current collector, wherein the active material layer contains lithium silicate composite particles each including a lithium silicate phase, and silicon particles dispersed in the lithium silicate phase, and an electrically conductive carbon material, a first coating covers at least a portion of a surface of the lithium silicate composite particles and at least a portion of a surface of the electrically conductive carbon material, the first coating includes an oxide of a first element other than a non-metal element, wherein the first and the second coating specify certain relationships with regards to their thickness.

KR 20130045212 A describes a manufacturing method of a negative electrode active material that comprises a shell part which has a coating layer including carbon materials on the surface of a core part including a silicon oxide particle, comprising a step of mixing the silicon oxide-carbon composite and oxygen-containing lithium salts, heat-treating the mixture to form a silicon oxide-lithium alloy, and obtaining a core-shell structured lithium silicate composite; and a step of wash-drying the surface of the core-shell structured lithium silicate composite.

JP 6301142 B2 describes a negative electrode material for a nonaqueous electrolyte secondary battery that includes a conductive powder formed by coating surfaces of silicon-based active material particles with conductive carbon films.

### [Detailed Description of the Invention]

### [Technical Problem]

The present invention has been made in an effort to provide a negative electrode active material capable of improving the initial efficiency, simultaneously minimizing the decrease in discharge capacity, ameliorating the problem of a decrease in viscosity of a slurry and gas generation when applied to a secondary battery, a method for preparing a negative electrode active material, a negative electrode slurry and a negative electrode, which include the negative electrode active material, and a secondary battery including the negative electrode.

### [Technical Solution]

The invention is set out in the appended set of claims.

The present invention provides a negative electrode active material including silicon-based oxide particles, in which the silicon-based oxide particles include Li and include a first covering layer and a second covering layer provided on the surface of the silicon-based oxide particles, each of the first covering layer and the second covering layer is a carbon layer, lithium silicate (Li-silicate) formed by a silicon-based oxide and Li is not included between the first covering layer and the second covering layer, or each of LiOH and Li₂CO₃ is included in an amount of less than 1 wt% based on 100 wt% of the entire negative electrode active material.

The present invention also provides a method for preparing the negative electrode active material as defined above as a method for preparing a negative electrode active material including silicon-based oxide particles, the method including: forming a first covering layer which is a carbon layer on silicon-based oxide particles; doping the silicon-based oxide particles on which the first covering layer is formed with Li; removing, by etching, lithium silicate (Li-silicate) formed by a silicon-based oxide and Li on the silicon-based oxide particles on which the first covering layer is formed; and forming a second covering layer which is a carbon layer on the silicon-based oxide particles on which the etched first covering layer is formed.

The present invention also provides a negative electrode slurry including the negative electrode active material.

The present invention further provides a negative electrode including the negative electrode active material.

The present invention furthermore provides a secondary battery including the negative electrode.

### [Advantageous Effects]

Negative electrode active materials according to exemplary embodiments of the present invention include silicon-based oxide particles containing Li, and thus can be used as high-efficiency materials. Specifically, the initial efficiency of a battery can be improved by including lithium. In particular, since lithium is a lightweight material compared to other materials, there is an advantage in that a decrease in discharge capacity due to an increase in lithium content is small. Further, by doping the silicon-based oxide particles with lithium in a state where the carbon layer is formed in the process of doping Li and removing lithium silicate (Li-silicate) present on the carbon layer by etching, the problem of a decrease in the viscosity of the negative electrode slurry and the problem of gas generation can be ameliorated.

In addition, by further coating the carbon layer after the etching to block a reaction of the active material surface and a slurry solvent (water), the problem of a decrease in the viscosity of the negative electrode slurry and the problem of gas generation can be ameliorated.

### [Best Mode]

Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

In the present specification, an average particle diameter (D₅₀) is defined as a particle diameter corresponding to 50% of a cumulative volume in a particle diameter distribution curve of the particles. The average particle diameter (D₅₀) is measured using a laser diffraction method. The laser diffraction method can generally measure a particle diameter of from the submicron region to about several mm, and results with high reproducibility and high resolution may be obtained.

In the present specification, the specific surface area of the silicon-based oxide particle is measured by a Brunauer-Emmett-Teller (BET) method. Specifically, the specific surface area of the silicon-based oxide particle is measured by a BET six-point method by a nitrogen gas adsorption distribution method using a porosimetry analyzer (Bell Japan Inc, Belsorp-II mini).

In the present specification, the content of Li in the entire silicon-based oxide particles is confirmed through ICP analysis. Through the ICP analysis, after a predetermined amount (about 0.01 g) of the silicon-based oxide particles are exactly aliquoted, the silicon-based oxide particles are completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the concentration of the Li in the particles may be analyzed by converting the total sum so as to be the theoretical value.

In the present specification, the content of Li byproducts (LiOH, Li₂CO₃) on the surfaces of the first covering layer and the second covering layer after etching may be measured using pH titration. For example, the content of Li byproducts (LiOH, Li₂CO₃) may be analyzed by washing the 20% content of SiO (solvent: water) with water for 10 minutes (stirrer), performing filtration for 30 minutes to extract the solution, and performing pH titration.

### <Negative electrode active material>

The negative electrode active material according to the present invention includes silicon-based oxide particles, in which the silicon-based oxide particles include Li and include a first covering layer and a second covering layer provided on the surface of the silicon-based oxide particles, each of the first covering layer and the second covering layer is a carbon layer, lithium silicate (Li-silicate) formed by silicon-based oxides and Li is not included between the first covering layer and the second covering layer, or each of LiOH and Li₂CO₃ is included in an amount of less than 1 wt% based on 100 wt% of the entire negative electrode active material.

In the above-mentioned exemplary embodiment, a first covering layer and a second covering layer are provided on the surface of silicon-based oxide particles including Li, and this is achieved by doping the silicon-based oxide particles with Li after forming the first covering layer, and then removing lithium silicate (Li-silicate) formed by a silicon-based oxide and Li between the aforementioned first covering layer and the second covering layer by etching such as acid treatment before forming the second covering layer, via a preparation method to be described below.

When etching is performed by directly doping the silicon-based oxide particles with Li without forming the first covering layer, the physical properties as a negative electrode active material may be impaired, thereby degrading the battery performance. Specifically, since a Li-doped silicon-based oxide material is very vulnerable to moisture and oxidation, the physical properties of the material inevitably deteriorate when the silicon-based oxide particles are directly doped with Li and etching is performed without forming the first covering layer. Furthermore, when the silicon-based oxide particles are doped with Li and etching is performed without forming the first covering layer, not only an irreversible material to be removed, but also a Li-SiO structure present in the particle may be etched, and are highly likely to be excessively etched.

In the present invention, after the first covering layer which is a carbon layer is formed, lithium silicate (Li-silicate) on the first covering layer is removed without impairing the physical properties of the material by doping the silicon-based oxide particles with Li and performing etching, thereby contributing to surface stabilization. Further, an additional second covering layer is formed on the first covering layer, thereby contributing to the stabilization in the particles. By removing the lithium silicate (Li-silicate) as described above, the aforementioned lithium silicate (Li-silicate) is reduced in the first covering layer and the second covering layer, and the problem of a decrease in the viscosity of the negative electrode slurry including the aforementioned particles and the problem of gas generation may be ameliorated.

According to an exemplary embodiment, the content of Li may be, based on 100 wt% of the entire negative electrode active material, 1 wt% or more and 15 wt% or less, and is preferably 1.5 wt% or more and 13 wt% or less, for example, 3 wt% or more and 12 wt% or less. When the Li content is 1 wt% or more, it is advantageous in increasing the initial efficiency of a battery. When the Li content is 1 wt% or more, it is advantageous in increasing the initial efficiency of the battery, and when the Li content is 15 wt% or less, it is advantageous in terms of slurry processability.

According to an exemplary embodiment, the silicon-based oxide particles may include SiOₓ (0<x<2) as a silicon-based oxide component. The SiOₓ (0<x<2) may correspond to a matrix in the silicon-based oxide particles. The SiOₓ (0<x<2) may be in a form including Si and SiO₂, and the Si may also form a phase. That is, the x corresponds to the number ratio of O for Si included in the SiOₓ (0<x<2). When the silicon-based oxide particles include the SiOₓ (0<x<2), the discharge capacity of a secondary battery may be improved.

According to still another exemplary embodiment of the present invention, the Li may be present as a Li compound phase. The Li compound phase may be present in the form of at least one of a lithium silicate, a lithium silicide, and a lithium oxide. The Li compound phase may be a lithium silicate (Li-silicate), may be, for example, represented by LiₐSi_{b}O_{c} (2≤a≤4, 0<b≤2, 2≤c≤5), and more specifically, may include one or more selected from the group consisting of Li₂SiO₃, Li₂Si₂O₅, Li₃SiO₃, Li₄SiO₄, LiOH, and Li₂CO₃.

According to an exemplary embodiment, the lithium silicate (Li-silicate) formed by the silicon-based oxide and Li between the first covering layer and the second covering layer may include one or more selected from the group consisting of Li₂SiO₃, Li₂Si₂O₅, Li₃SiO₃, Li₄SiO₄, LiOH, and Li₂CO₃, and may be, for example, LiOH or Li₂CO₃.

The lithium silicate (Li-silicate) may have a different phase produced according to the content of Li, and Li₂SiO₃ or Li₂Si₂O₅ may be usually produced.

The LiOH and Li₂CO₃ may be produced by a reaction of the Li with H₂O and CO₂ before doping the silicon-based oxide particles with Li and performing etching after forming the first covering layer which is a carbon layer in the exemplary embodiment of the present invention, and are removed by the etching, so that each of the LiOH and Li₂CO₃ may be included in an amount of less than 1 wt% based on 100 wt% of the entire negative electrode active material, that is, in a small amount.

The Li compound is in a form in which the silicon-based oxide particles are doped with the compound, and may be distributed on the surface and/or inside of the silicon-based particle. The Li compound is distributed on the surface and/or inside of the silicon-based oxide particle, and thus may control the volume expansion/contraction of the silicon-based oxide particles to an appropriate level, and may serve to prevent damage to the active material. Further, the Li compound may be contained in terms of reducing the ratio of the irreversible phase (for example, SiO₂) of the silicon-based oxide particles to increase the efficiency of the active material.

According to an exemplary embodiment, the first covering layer may cover the entire surface of the silicon-based oxide particles, but may cover only a portion of the surface. The second covering layer may be provided on at least part of the surface of the silicon-based oxide particles provided with the first covering layer.

According to an exemplary embodiment, a part of the second covering layer may be provided in direct contact with the surface of the silicon-based oxide particles, but a part or all of the second covering layer may be provided in contact with the first covering layer.

Each of the first covering layer and the second covering layer is a carbon layer.

Conductivity is imparted to the silicon-based oxide particles by the carbon layer of the first covering layer and/or the carbon layer of the second covering layer, and the volume change of a negative electrode active material including the silicon-based oxide particles is effectively suppressed, so that the service life characteristics of the battery may be improved.

In an exemplary embodiment of the present specification, the carbon layer may include at least any one of amorphous carbon and crystalline carbon.

The crystalline carbon may further improve the conductivity of the silicon-based oxide particles. The crystalline carbon may include at least any one selected from the group consisting of fullerene, carbon nanotube and graphene.

The amorphous carbon may suppress the expansion of the silicon-based oxide particles by appropriately maintaining the strength of the carbon layer. The amorphous carbon may be a carbide of at least any one substance selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 1 wt% to 50 wt%, specifically, 1 wt% to 40 wt%, 1 wt% to 30 wt%, or 1 wt% to 20 wt%, and more specifically 1 wt% to 15 wt%, based on 100 wt% of the entire negative electrode active material. For example, when both the first covering layer and the second covering layer are a carbon layer, the carbon layer may be included in an amount of 1 wt% to 7 wt% based on 100 wt% of the entire negative electrode active material when only the first covering layer is coated and measurement is made, and the carbon layer may be included in an amount of 1 wt% to 15 wt% based on 100 wt% of the entire negative electrode active material when the first covering layer and even the second covering layer are coated and measurement is made.

When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment, the carbon layer may each have a thickness of 1 nm to 500 nm, specifically 5 nm to 300 nm. When the above range is satisfied, the volume change of the negative electrode active material is readily suppressed and side reactions between an electrolyte solution and the negative electrode active material are suppressed, so that the service life characteristics of a battery may be improved.

In an exemplary embodiment, the carbon layer may include any one element of Li, F and O. For the element, an additional component element may be included in the carbon layer by the composition of the electrolyte solution.

According to another exemplary embodiment of the present invention, the silicon-based oxide particles may include a phosphate layer including at least one of aluminum phosphate and lithium phosphate provided on the surface, and the phosphate layer may be an aluminum phosphate layer, a lithium phosphate layer or an aluminum lithium phosphate layer.

A phosphate layer may be formed by using a method of performing a coating treatment by dry-mixing the above-described silicon-based oxide particles and phosphate and heat-treating the resulting mixture; a method of performing a coating treatment by mixing the above-described silicon-based oxide particles and phosphate with a solvent, and then reacting the resulting mixture while evaporating the solvent; a method of performing a coating treatment by dry-mixing an aluminum or lithium precursor, for example, an aluminum oxide or lithium oxide with a phosphorus precursor, for example, a phosphorus oxide and heat-treating the resulting mixture; or a method of performing a coating treatment by mixing an aluminum or lithium precursor, for example, an aluminum oxide or lithium oxide with a phosphorus precursor, for example, a phosphorous oxide with a solvent, and then reacting the resulting mixture while evaporating the solvent.

For example, a method of performing a coating treatment by dry-mixing the above-described silicon-based oxide particles and Al_{y}P_{z}O_{w} (aluminum phosphate-based) and heat-treating the resulting mixture, a method of performing a coating treatment by mixing Al_{y}P_{z}O_{w} and silicon-based oxide particles with a solvent, and then reacting the resulting mixture while evaporating the solvent, a method of performing a coating treatment by dry-mixing AlₓO_{y} (aluminum precursor) and P_{z}O_{w} (P precursor) and heat-treating the resulting mixture, and a method of performing a coating treatment by mixing AlₓO_{y} (aluminum precursor) and P_{z}O_{w} (P precursor) with a solvent, and then reacting the resulting mixture while evaporating the solvent may be used.

As another example, a method of performing a coating treatment by dry-mixing the above-described silicon-based oxide particles and LiₓAl_{y}P_{z}O_{w} (Li-Al-P-O-based) and heat-treating the resulting mixture and a method of performing a coating treatment by mixing LiₓAl_{y}P_{z}O_{w} and silicon-based oxide particles with a solvent, and then reacting the resulting mixture while evaporating the solvent may be used.

Here, x, y, z and w may be 0<x≤10, 0<y≤10, 0<z≤10, and 0<w≤10, and mean the number ratio of each atom.

According to an exemplary embodiment of the present invention, x may be 0<x≤3.

According to an exemplary embodiment of the present invention, y may be 0<y≤1.

According to an exemplary embodiment of the present invention, z may be 0.5≤z≤3.

According to an exemplary embodiment of the present invention, w may be 4<w≤12.

As an example, AlPO₄ and Al(PO₃)₃ may be used as a surface treatment material for forming a phosphate layer, and a material produced on the particle surface may be Li₃PO₄ or AlPO₄.

Al in the phosphate layer may be included in an amount of 0.01 wt% to 0.5 wt% based on 100 wt% of the negative electrode active material, and P may be included in an amount 0.01 wt% to 1.5 wt% based on total 100 wt% of the silicon-based oxide particles. When the above range is satisfied, there is an advantage in that slurry processability is improved by suppressing the reaction between the above-described silicon-based oxide particles and water in the water-based mixing process.

According to yet another exemplary embodiment of the present invention, the silicon-based oxide particles may have an average particle diameter (D₅₀) of 1 µm to 30 µm. The silicon-based oxide particles may have an average particle diameter (D₅₀) of specifically 3 µm to 20 µm, and more specifically 5 µm to 10 µm. When the above range is satisfied, side reactions between the negative electrode active material and an electrolyte solution may be controlled, and the discharge capacity and initial efficiency of the battery may be effectively implemented.

According to yet another exemplary embodiment of the present invention, the silicon-based oxide particles may have a BET specific surface area of 0.5 m²/g to 60 m²/g. The silicon-based oxide particles may have a BET specific surface area of specifically 0.6 m²/g to 20 m²/g, and more specifically 0.8 m²/g to 12 m²/g. When the above range is satisfied, side reactions between an electrolyte solution and the negative electrode active material during the charging and discharging of a battery may be reduced, so that the service life characteristics of the battery may be improved.

According to yet another exemplary embodiment of the present invention, the silicon-based oxide particles may further include Si crystal grains. The Si crystal grains may have a particle diameter of 1 nm to 15 nm. For example, the Si crystal grains may have a particle diameter of 1 nm to 14 nm, or 1 nm to 13 nm. The particle diameters of the Si crystal grains may be calculated by XRD analysis.

### <Method for preparing negative electrode active material>

A method for preparing a negative electrode active material including the silicon-based oxide particles according to an exemplary embodiment includes: forming a first covering layer which is a carbon layer on silicon-based oxide particles; doping the silicon-based oxide particles on which the first covering layer is formed with Li; removing, by etching, lithium silicate (Li-silicate) formed by a silicon-based oxide and Li on the silicon-based oxide particles on which the first covering layer is formed; and forming a second covering layer which is a carbon layer on the silicon-based oxide particles on which the etched first covering layer is formed.

Before or after the first covering layer, which is a carbon layer, is formed, the particle diameter of the silicon-based oxide particles may be adjusted by a pulverization method such as a mechanical milling method, if necessary.

The forming of the first covering layer which is the carbon layer on the surface of the silicon-based oxide particles may be performed, for example, by a method of injecting a carbon-based raw material gas such as methane gas and performing a heat treatment in a rotary tubular furnace. Specifically, a carbon layer may be formed by introducing the silicon-based oxide particles into a rotary tubular furnace, increasing the temperature to 800°C to 1,150°C, 900°C to 1,050°C, or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

The doping of the silicon-based oxide particles on which the first covering layer is formed with Li may be performed by mixing silicon-based oxide particles on which a carbon layer is formed; a lithium metal powder or a lithium precursor, for example, Li metal powder, LiOH, and Li₂O, and performing heat-treating the resulting mixture at 400°C to 1200°C, if necessary. Alternatively, the step may be performed using an electrochemical method.

The removing of, by etching, the lithium silicate (Li-silicate) formed by the silicon-based oxide and Li on the silicon-based oxide particles on which the first covering layer is formed is performed by etching.

The etching may be performed using an acid or a base, the acid may be at least any one of hydrofluoric acid (HF), nitric acid (HNO₃), sulfuric acid (H₂SO₄) and hydrochloric acid (HCl), and the base may be at least any one of sodium hydroxide (NaOH) and potassium hydroxide (KOH). Specifically, a mixed solution of hydrofluoric acid and ethanol may be used during the etching. The etching may be performed for 1 hour to 3 hours, specifically, 1 hour to 2.5 hours.

In an exemplary embodiment, the etching may be performed using NaOH, HF or KOH.

Material on the first covering layer is removed by the aforementioned etching. The removed material includes lithium silicate (Li-silicate) and may include LiOH and Li₂CO₃.

The forming of the second covering layer which is a carbon layer on the silicon-based oxide particles on which the etched first covering layer is formed as described above, is performed. The second covering layer is a carbon layer, and the method exemplified as the method of forming the first covering layer may be used.

According to an exemplary embodiment, the second covering layer may further include an aluminum phosphate layer, which may be formed in the same manner as the method of forming the phosphate layer described above.

The doping of the silicon-based oxide particles on which the first covering layer is formed with Li may be performed by mixing silicon-based oxide particles on which a carbon layer is formed; a lithium metal powder or a lithium precursor, for example, Li metal powder, LiOH, and Li₂O, and performing heat-treating the resulting mixture at 400°C to 1200°C, if necessary. Alternatively, the step may be performed using an electrochemical method.

### <Negative electrode>

The negative electrode of the present invention includes a negative electrode active material as described above. Specifically, the negative electrode may include a negative electrode current collector and a negative electrode active material layer disposed on the negative electrode current collector. The negative electrode active material layer includes the negative electrode active material. Furthermore, the negative electrode active material layer may further include a binder and/or a conductive material.

The present invention also provides a negative electrode slurry including the above-described negative electrode active material.

The negative electrode slurry a may further include a solvent in the material of the above-described negative electrode active material layer. According to an example, the viscosity of the negative electrode slurry may be measured in a graphite mixed composition, and may be measured, for example, under the conditions of the total negative electrode active material 96.5%, the conductive material 1%, the binder 1.5%, and the thickener 1% in a composition of artificial graphite 80% and the silicon-based oxide 20%. The prepared negative electrode slurry may have a viscosity of 10,000 cps to 25,000 cps (10 Pa·s to 25 Pa·s) when measured at room temperature.

According to an exemplary embodiment, the degree of gas generation obtained by putting 20 g of the negative electrode slurry into a pouch, sealing the slurry, and then storing the sealed pouch in a chamber at 40°C to measure a changed volume may be 10 mL to 200 mL on day 7 after storing the pouch in a chamber at 40°C. The changed volume may be obtained by putting the sealed pouch into water and measuring the changed volume of water. The degree of gas generation may be specifically 10 mL to 150 mL, 10 mL to 100 mL, or 10 mL to 70 mL.

The negative electrode current collector is sufficient as long as the negative electrode current collector has conductivity without causing a chemical change to the battery, and is not particularly limited.

For example, as the current collector, it is possible to use copper, stainless steel, aluminum, nickel, titanium, fired carbon, or a material in which aluminum or stainless steel whose surface is surface-treated with carbon, nickel, titanium, silver, and the like. Specifically, a transition metal, such as copper or nickel which adsorbs carbon well, may be used as a current collector. Although the current collector may have a thickness of 6 µm to 20 µm, the thickness of the current collector is not limited thereto.

The binder may include at least any one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a carbon fluoride powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

### <Secondary battery>

The secondary battery according to the present invention includes the negative electrode described above. Specifically, the secondary battery includes a negative electrode, a positive electrode, a separator interposed between the positive electrode and the negative electrode, and an electrolyte, and the negative electrode is the same as the above-described negative electrode.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which aluminum or stainless steel is surface-treated with carbon, nickel, titanium, silver, and the like. Further, the positive electrode current collector may typically have a thickness of 3 µm to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}Mc₂O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and battery pack include the secondary battery having high capacity, high rate-limiting characteristics, and high cycle characteristics. The secondary battery may be used as a power source for a medium- or large-sized device selected from the group consisting of an electric vehicle, a hybrid electric vehicle, a plug-in hybrid electric vehicle, and a power storage system.

### <Examples>

### Example 1: Preparation of negative electrode active material

### (1) Preparation of preliminary silicon-based oxide particles (first covering layer formation)

A powder in which a Si powder and a SiO₂ powder were uniformly mixed at a molar ratio of 1:1 was heat-treated at 1,400°C in a reduced pressure atmosphere to recover a SiO powder. After the reacted powder was cooled and precipitated, the composite was pulverized with a jet mill to collect particles having an average particle diameter (D₅₀) of about 6 µm.

The collected particles were put into a tubular furnace in the form of a tube and subjected to chemical vapor deposition (CVD) treatment under a mixed gas of argon (Ar) and methane (CH₄) to prepare preliminary silicon-based oxide particles on which a carbon coating layer is formed.

### (2) Preparation of silicon-based oxide particles (Li doping)

Particles including Li were prepared by heat-treating the preliminary silicon-based oxide powder and the Li metal powder at a temperature of 800°C in an inert atmosphere for 2 hours.

### (3) Preparation of preliminary negative electrode active material (etching process)

A mixed solution of hydrofluoric acid and ethanol was used as an etching solution. After the silicon-based oxide particles were put into the etching solution at a weight ratio of 20:1 and mixed for about 1 hour, the resulting mixture was filtered, washed and dried to form preliminary negative electrode active material particles.

### (4) Preparation of negative electrode active material (second covering layer formation)

The preliminary negative electrode active material particles were put into a tubular furnace in the form of a tube and subjected to chemical vapor deposition (CVD) treatment under a mixed gas of argon (Ar) and methane (CH₄) to prepare negative electrode active material particles in which the second covering layer is a carbon coating layer.

As a result of ICP analysis, the Li content of the prepared negative electrode active material was 4.8 wt% based on 100 wt% of the negative electrode active material particles.

As a result of CS analysis, the C content of the prepared negative electrode active material was 7 wt% based on 100 wt% of the negative electrode active material particles.

The negative electrode active material particles were mixed with water as a solvent at a ratio of about 20% for 10 minutes, and then subjected to a filtration process, and then pH titration of the solution was performed. The contents of LiOH and Li₂CO₃ were measured at 0.23 wt% and 0.11 wt%, respectively, based on 100 wt% of the entire negative electrode active material.

### Example 2: Preparation of negative electrode active material

A negative electrode active material was prepared in the same manner as in Example 1, except that the etching was performed for 30 minutes during the preparation of the preliminary negative electrode active material.

### Example 3: Preparation of negative electrode active material

A negative electrode active material was prepared in the same manner as in Example 1, except that the ratio of the preliminary silicon-based oxide powder and the Li metal powder was changed during the preparation of the silicon oxide particles.

### Example 4: Preparation of negative electrode active material

A negative electrode active material was prepared in the same manner as in Example 3, except that the etching was performed for 30 minutes during the preparation of the preliminary negative electrode active material.

### Comparative Example 1: Preparation of negative electrode active material

A negative electrode active material was prepared in the same manner as in Example 1, except that a surface coating layer composed of AlPO₄ was formed instead of the carbon coating layer during the preparation of the negative electrode active material.

The surface coating layer composed of AlPO₄ was formed by mixing the prepared preliminary negative electrode active material particles with Al(PO₃)₃, and then heat-treating the resulting mixture at a temperature of 600°C.

As a result of ICP analysis, the contents of Al and P of the prepared negative electrode active material were 0.18 wt% and 0.54 wt%, respectively, based on 100 wt% of the entire negative electrode active material.

### Comparative Example 2: Preparation of negative electrode active material

A negative electrode active material was prepared in the same manner as in Comparative Example 1, except that the etching was performed for 30 minutes during the preparation of the preliminary negative electrode active material.

### Comparative Example 3: Preparation of negative electrode active material

A negative electrode active material was prepared in the same manner as in Comparative Example 1, except that the ratio of the preliminary silicon-based oxide powder and the Li metal powder was changed during the preparation of the silicon oxide particles.

### Comparative Example 4: Preparation of negative electrode active material

A negative electrode active material was prepared in the same manner as in Comparative Example 3, except that the etching was performed for 30 minutes during the preparation of the preliminary negative electrode active material.

### Comparative Example 5: Preparation of negative electrode active material

A negative electrode active material was prepared in the same manner as in Example 1, except that the carbon coating layer was not formed during the preparation of the preliminary silicon-based oxide particles.

### Comparative Example 6: Preparation of negative electrode active material

A negative electrode active material was prepared in the same manner as in Comparative Example 1, except that the carbon coating layer was not formed during the preparation of the preliminary silicon-based oxide particles.

### Comparative Example 7: Preparation of negative electrode active material

A negative electrode active material was prepared in the same manner as in Example 1, except that the carbon coating layer was not formed during the preparation of the negative electrode active material.

### Comparative Example 8: Preparation of negative electrode active material

A negative electrode active material was prepared in the same manner as in Example 1, except that the etching process which is a process of preparing a preliminary negative electrode active material was not performed.

### Comparative Example 9: Preparation of negative electrode active material

A negative electrode active material was prepared in the same manner as in Comparative Example 1, except that the etching process which is a process of preparing a preliminary negative electrode active material was not performed.

**[Table 1]**

| | Negative electrode active material Li content (wt.%) | Negative electrode active material C content (wt.%) | Negative electrode active material Al content (wt.%) | Negative electrode active material P content (wt.%) | Negative electrode active material LiOH content (wt.%) | Negative electrode active material Li2CO3 content (wt.%) |
|---|---|---|---|---|---|---|
| Example 1 | 4.8 | 7 | - | - | 0.23 | 0.11 |
| Example 2 | 4.8 | 7 | - | - | 0.31 | 0.16 |
| Example 3 | 8.1 | 7 | - | - | 0.42 | 0.18 |
| Example 4 | 8.1 | 7 | - | - | 0.48 | 0.22 |
| Comparative Example 1 | 5.5 | 4 | 0.18 | 0.54 | 0.51 | 0.22 |
| Comparative Example 2 | 5.5 | 4 | 0.18 | 0.54 | 0.71 | 0.43 |
| Comparative Example 3 | 9.0 | 4 | 0.15 | 0.45 | 0.62 | 0.34 |
| Comparative Example 4 | 9.0 | 4 | 0.15 | 0.45 | 0.82 | 0.51 |
| Comparative Example 5 | 6.1 | 3 | - | - | 2.7 | 1.5 |
| Comparative Example 6 | 5.5 | - | 0.21 | 0.61 | 3.1 | 1.8 |
| Comparative Example 7 | 5.8 | 4 | - | - | 2.6 | 1.4 |
| Comparative Example 8 | 5.7 | 7 | - | - | 3.4 | 2.1 |
| Comparative Example 9 | 5.9 | 4 | 0.16 | 0.51 | 3.1 | 1.9 |

### <Measurement of slurry viscosity and amount of gas generated>

### Examples 1A to 4A

A mixed negative electrode active material in which the negative electrode active material prepared in Example 1 and artificial graphite were mixed at a weight ratio of 2:8, carbon black as a conductive material, and carboxymethyl cellulose (CMC) and styrene butadiene rubber (SBR) as binders were mixed with water as a solvent at a weight ratio of the mixed negative electrode active material : the conductive material : the binder (CMC) : the binder (styrene butadiene) = 96.5:1:1:1.5, thereby preparing a negative electrode slurry in Example 1A.

Negative electrode slurries in Examples 2A to 4A were prepared in the same manner as in Example 1A, except that as negative electrode active materials, the negative electrode active materials in Examples 2 to 4 were used, respectively.

The prepared slurry was stored at room temperature for 2 days, and then measured at 23°C using a rheometer (manufactured by TA Instruments, HR 20). The relative viscosities are shown in the following Table 2 based on the 1 Hz viscosity values of Example 1.

Gas generation may be confirmed by putting 20 g of the aforementioned slurry into a pouch, sealing the pouch, then storing the pouch in a chamber at 40°C for 7 days, and then measuring the changed volume of the pouch. In this case, the amount of gas generated may be confirmed by putting the sealed pouch into water and measuring the changed volume of water. The amount of gas generated is shown in the following Table 2.

### Comparative Examples 1A to 9A

Negative electrode slurries in Comparative Examples 1A to 9A were prepared in the same manner as in Example 1A, except that as negative electrode active materials, the negative electrode active materials in Comparative Examples 1 to 9 were used, respectively.

**[Table 2]**

| | Viscosity (%) after storage at room temperature for 2 days | Amount (mL) of gas generated after storage at 40°C for 7 days |
|---|---|---|
| Example 1A | 100 | 10 |
| Example 2A | 99 | 15 |
| Example 3A | 98 | 20 |
| Example 4A | 97 | 25 |
| Comparative Example 1A | 96 | 40 |
| Comparative Example 2A | 91 | 30 |
| Comparative Example 3A | 94 | 50 |
| Comparative Example 4A | 89 | 60 |
| Comparative Example 5A | 65 | 160 |
| Comparative Example 6A | 61 | 180 |
| Comparative Example 7A | 66 | 150 |
| Comparative Example 8A | 59 | 200 |
| Comparative Example 9A | 57 | 210 |

In the case of Comparative Examples 1A to 9A, it could be confirmed that due to Li doping, there was a problem in that the viscosity of the slurry including Li decreased and gas was generated.

In contrast, in Examples 1A to 4A, it could be confirmed that silicon-based oxide particles include Li, and include a carbon layer which is a first covering layer and a carbon layer which is a second covering layer provided on the surface of the silicon-based oxide particles, an irreversible material formed by a silicon-based oxide and Li was not included between the first covering layer and the second covering layer, or in a slurry in which LiOH and Li₂CO₃ are included in an amount of less than 1 wt%, respectively, based on 100 wt% of the entire negative electrode active material, the viscosity was high and a problem of gas generation was reduced compared to Comparative Examples 1A to 9A.

### <Manufacture of negative electrode and lithium secondary battery>

### Examples 1B to 4B

A uniform negative electrode slurry was prepared by mixing together the negative electrode active material prepared in Example 1 as a negative electrode active material, carbon black as a conductive material, and Li-PAA as a binder at a weight ratio of 80:10:10 with water (H₂O) which is a solvent. One surface of the copper current collector was coated with the prepared negative electrode slurry, and the copper current collector was dried and rolled, and then punched in a predetermined size to manufacture a negative electrode.

Li metal was used as a counter electrode, and after a polyolefin separator was interposed between the negative electrode and Li metal, an electrolyte in which 1 M LiPF6 was dissolved into a solvent in which ethylene carbonate (EC) and diethyl carbonate (DEC) were mixed at a volume ratio of 30:70 was injected, thereby manufacturing the negative electrode in Example 1B and a coin-type half battery.

Negative electrodes and coin-type half batteries in Examples 2B to 4B were manufactured in the same manner as in Example 1B, except that as negative electrode active materials, the negative electrode active materials in Examples 2 to 4 were used, respectively.

### Comparative Examples 1B to 9B

Negative electrodes and coin-type half batteries in Comparative Examples 1B to 9B were manufactured in the same manner as in Example 1B, except that as negative electrode active materials, the negative electrode active materials in Comparative Examples 1 to 9 were used, respectively.

### < Evaluation of discharge capacity, initial efficiency and cycle characteristics of secondary battery >

The discharge capacity, initial efficiency, and cycle characteristics were evaluated by charging and discharging the secondary batteries of Examples 1B to 4B and Comparative Examples 1B to 9B, and are shown in the following Table 3.

The batteries manufactured in Examples 1B to 4B and Comparative Examples 1B to 9B were charged at a constant current (CC) of 0.1 C at 25°C until the voltage became 5 mV and then charged at a constant voltage (CV) until the charging current became 0.005 C (cut-off current), so as to perform the first charging. Thereafter, the batteries were left to stand for 20 minutes, and then discharged at a constant current (CC) of 0.1 C until the voltage became 1.5 V to confirm the initial efficiency.

Thereafter, the cycle characteristics were evaluated by repeating charging and discharging at 0.5 C up to 40 cycles to measure the capacity retention rate.

The initial efficiency (%) was derived from the results during 1^{st} charge/discharge by the following equation. 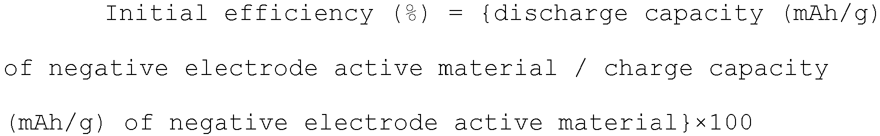 Initial efficiency (%) = {discharge capacity (mAh/g) of negative electrode active material / charge capacity (mAh/g) of negative electrode active material}×100

The charge retention rate was derived by the following calculation equation. 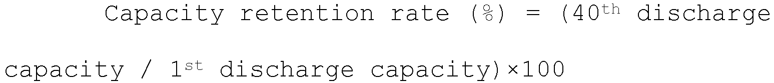 Capacity retention rate (%) = (40th discharge capacity / 1st discharge capacity)×100

**[Table 3]**

| | Discharge capacity (mAh/g) | Initial efficiency (%) | Capacity retention rate (%) |
|---|---|---|---|
| Example 1B | 1407 | 87.1 | 85.4 |
| Example 2B | 1397 | 86.5 | 84.9 |
| Example 3B | 1391 | 91.5 | 84.2 |
| Example 4B | 1381 | 91.2 | 83.9 |
| Comparative Example 1B | 1401 | 86.3 | 83.8 |
| Comparative Example 2B | 1390 | 86.0 | 83.6 |
| Comparative Example 3B | 1385 | 91.2 | 83.1 |
| Comparative Example 4B | 1374 | 90.9 | 82.9 |
| Comparative Example 5B | 1350 | 85.5 | 79.8 |
| Comparative Example 6B | 1345 | 85.1 | 79.5 |
| Comparative Example 7B | 1348 | 85.2 | 79.8 |
| Comparative Example 8B | 1330 | 84.9 | 79.1 |
| Comparative Example 9B | 1341 | 84.7 | 78.9 |

In Examples 1B to 4B, silicon-based oxide particles include Li, and include a carbon layer which is a first covering layer and a carbon layer which is a second covering layer provided on the surface of the silicon-based oxide particles, an irreversible material formed by a silicon-based oxide and Li was not included between the first covering layer and the second covering layer, or LiOH and Li₂CO₃ are included in an amount of less than 1 wt%, respectively, based on 100 wt% of the entire negative electrode active material, thereby improving the initial efficiency and service life characteristics of the battery.

In contrast, Comparative Examples 1B to 4B included an aluminum phosphate layer in the second covering layer, and it could be confirmed that the discharge capacity, initial efficiency and capacity retention rate deteriorated because it was not possible to contribute to the stabilization in the particles when compared to Examples 1B to 4B, respectively.

Since Comparative Examples 5B and 6B did not include a carbon layer, which is the first covering layer, the physical properties as a negative electrode active material was impaired by directly doping silicon-based oxide particles with Li and performing etching, and the battery performance deteriorated, so that it could be confirmed that the discharge capacity, initial efficiency and capacity retention rate deteriorated.

Comparative Example 7B did not include a carbon layer which is the second covering layer, and thus, could not contribute to the stabilization in the particles, so that it could be confirmed that the discharge capacity, initial efficiency and capacity retention rate deteriorated.

Since an irreversible material formed by a silicon-based oxide and Li was included between the first covering layer and the second covering layer in the case of Comparative Examples 8B to 9B, a problem of the reduction in the negative electrode slurry viscosity and a problem of gas generation occurred, so that it could be confirmed that the discharge capacity, initial efficiency and capacity retention rate deteriorated.

## Claims

1. A negative electrode active material comprising silicon-based oxide particles, wherein the silicon-based oxide particles comprise Li and comprise a first covering layer and a second covering layer provided on the surface of the silicon-based oxide particles, and each of the first covering layer and the second covering layer is a carbon layer, and
lithium silicate (Li-silicate) formed by a silicon-based oxide and Li is not comprised between the first covering layer and the second covering layer, or each of LiOH and Li₂CO₃ is comprised in an amount of less than 1 wt% based on 100 wt% of the entire negative electrode active material.

2. The negative electrode active material of claim 1, wherein a content of the Li is 1 wt% or more and 15 wt% or less based on 100 wt% of the entire negative electrode active material.

3. The negative electrode active material of claim 1, wherein the Li is present as a Li compound phase comprising one or more selected from the group consisting of Li₂SiO₃, Li₂Si₂O₅, Li₃SiO₃, Li₄SiO₄, LiOH, and Li₂CO₃.

4. The negative electrode active material of claim 1, wherein the silicon-based oxide particles have an average particle diameter (D₅₀) of 1 µm to 30 µm, wherein D₅₀ is defined as a particle diameter corresponding to 50% of a cumulative volume in a particle diameter distribution curve of the particles measured using a laser diffraction method.

5. The negative electrode active material of claim 1, wherein the silicon-based oxide particles have a BET specific surface area of 0.5 m²/g to 60 m²/g, measured by a BET six-point method by a nitrogen gas adsorption distribution method using a porosimetry analyzer.

6. The negative electrode active material of claim 1, wherein the silicon-based oxide particles comprises Si crystal grains having a particle diameter of 1 nm to 15 nm, calculated by XRD analysis.

7. A method for preparing the negative electrode active material of any one of claims 1 to 6 comprising silicon-based oxide particles, the method comprising:
forming a first covering layer which is a carbon layer on silicon-based oxide particles;
doping the silicon-based oxide particles on which the first covering layer is formed with Li;
removing, by etching, lithium silicate (Li-silicate) formed by a silicon-based oxide and Li on the silicon-based oxide particles on which the first covering layer is formed; and
forming a second covering layer which is a carbon layer on the silicon-based oxide particles on which the etched first covering layer is formed.

8. The method of claim 7, wherein the etching is performed using NaOH, HF or KOH.

9. A negative electrode slurry comprising the negative electrode active material according to any one of claims 1 to 6.

10. A negative electrode comprising the negative electrode active material according to any one of claims 1 to 6.

11. A secondary battery comprising the negative electrode of claim 10.

## Patentansprüche

1. Negativelektroden-Aktivmaterial, umfassend Oxidpartikel auf Siliciumbasis, worin die Oxidpartikel auf Siliciumbasis Li umfassen und eine erste Bedeckungsschicht und eine zweite Bedeckungsschicht umfassen, vorgesehen auf der Oberfläche der Oxidpartikel auf Siliciumbasis, und worin jede von der ersten Bedeckungsschicht und der zweiten Bedeckungsschicht eine Kohlenstoffschicht ist, und
Lithiumsilikat (Li-Silikat), gebildet aus einem Oxid auf Siliciumbasis und Li, nicht zwischen der erste Bedeckungsschicht und der zweiten Bedeckungsschicht umfasst ist, oder jedes von LiOH und Li₂CO₃ in einer Menge von weniger als 1 Gew.-% umfasst ist, bezogen auf 100 Gew.-% des gesamten Negativelektroden-Aktivmaterials.

2. Negativelektroden-Aktivmaterial gemäß Anspruch 1, worin der Gehalt von Li 1 Gew.-% oder mehr und 15 Gew.-% oder weniger beträgt, bezogen auf 100 Gew.-% des gesamten Negativelektroden-Aktivmaterials.

3. Negativelektroden-Aktivmaterial gemäß Anspruch 1, worin das Li als eine Li-Verbindungsphase vorliegt, die eines oder mehrere umfasst, ausgewählt aus der Gruppe bestehend aus Li₂SiO₃, Li₂Si₂O₅, Li₃SiO₃, Li₄SiO₄, LiOH und Li₂CO₃.

4. Negativelektroden-Aktivmaterial gemäß Anspruch 1, worin die Oxidpartikel auf Siliciumbasis einen mittleren Partikeldurchmesser (D₅₀) von 1 µm bis 30 µm aufweisen, worin D₅₀ definiert ist als ein Partikeldurchmesser, der 50 % des kumulativen Volumens in einer Partikeldurchmesser-Verteilungskurve der Partikel entspricht, gemessen unter Verwendung eines Laserbeugungsverfahrens.

5. Negativelektroden-Aktivmaterial gemäß Anspruch 1, worin die Oxidpartikel auf Siliciumbasis eine spezifische BET-Oberfläche von 0,5 m²/ bis 60 m²/g aufweisen, gemessen mit einem BET-Sechspunktverfahren durch ein Stickstoffgas-Adsorptions-Verteilungsverfahren unter Verwendung eines Porosimeters.

6. Negativelektroden-Aktivmaterial gemäß Anspruch 1, worin die Oxidpartikel auf Siliciumbasis Si-Kristallkörner mit einem Partikeldurchmesser von 1 nm bis 15 nm umfassen, berechnet mittels XRD-Analyse.

7. Verfahren zur Herstellung des Negativelektroden-Aktivmaterials gemäß irgendeinem der Ansprüche 1 bis 6, das Oxidpartikel auf Siliciumbasis umfasst, wobei das Verfahren umfasst:
Bilden einer ersten Bedeckungsschicht, welche eine Kohlenstoffschicht ist, auf Oxidpartikeln auf Siliciumbasis;
Dotieren der Oxidpartikel auf Siliciumbasis, auf der die erste Bedeckungsschicht gebildet ist, mit Li;
Entfernen von Lithiumsilikat (Li-Silikat), das aus dem Oxid auf Siliciumbasis und Li auf den Oxidpartikeln auf Siliciumbasis, auf denen die erste Bedeckungsschicht gebildet worden ist, gebildet worden ist, durch Ätzen; und
Bilden einer zweiten Bedeckungsschicht, welche eine Kohlenstoffschicht ist, auf den Oxidpartikeln auf Siliciumbasis, auf denen die geätzte erste Bedeckungsschicht gebildet ist.

8. Verfahren gemäß Anspruch 7, worin das Ätzen unter Verwendung von NaOH, HF oder KOH durchgeführt wird.

9. Negativelektrodenaufschlämmung, umfassend das Negativelektroden-Aktivmaterial gemäß irgendeinem der Ansprüche 1 bis 6.

10. Negative Elektrode, umfassend das Negativelektroden-Aktivmaterial gemäß irgendeinem der Ansprüche 1 bis 6.

11. Sekundärbatterie, umfassend die negative Elektrode gemäß Anspruch 10.

## Revendications

1. Matériau actif d'électrode négative comprenant des particules d'oxyde à base de silicium, dans lequel les particules d'oxyde à base de silicium comprennent du Li et comprennent une première couche de revêtement et une deuxième couche de revêtement situées sur la surface des particules d'oxyde à base de silicium, et chacune parmi la première couche de revêtement et la deuxième couche de revêtement est une couche de carbone, et
le silicate de lithium (Li-silicate) formé par un oxyde à base de silicium, et du Li n'est pas compris entre la première couche de revêtement et la deuxième couche de revêtement, ou chacun parmi le LiOH et le Li₂CO₃ est présent selon une teneur de moins de 1 % en poids par rapport à 100 % en poids de l'ensemble du matériau actif d'électrode négative.

2. Matériau actif d'électrode négative selon la revendication 1, dans lequel la teneur en Li est de 1 % en poids ou plus et de 15 % en poids ou moins, par rapport 100 % en poids de l'ensemble du matériau actif d'électrode négative.

3. Matériau actif d'électrode négative selon la revendication 1, dans lequel le Li est présent sous forme d'une phase de composé de Li comprenant un ou plusieurs, sélectionnés, faisant partie du groupe constitué par Li₂SiO₃, Li₂Si₂O₅, Li₃SiO₃, Li₄SiO₄, LiOH et Li₂CO₃.

4. Matériau actif d'électrode négative selon la revendication 1, dans lequel les particules d'oxyde à base de silicium présentent un diamètre moyen de particules (D₅₀) de 1 µm à 30 µm, dans lequel D₅₀ est défini comme étant un diamètre de particule correspondant à 50 % d'un volume cumulé dans une courbe de distribution de diamètre de particule des particules mesurées en utilisant une méthode de diffraction laser.

5. Matériau actif d'électrode négative selon la revendication 1, dans lequel les particules d'oxyde à base de silicium présentent une surface spécifique BET de 0,5 m²/g à 60 m²/g, mesurée par une méthode BET à six points par une méthode de distribution par adsorption de gaz d'azote utilisant un analyseur de porosimétrie.

6. Matériau actif d'électrode négative selon la revendication 1, dans lequel les particules d'oxyde à base de silicium comprennent des grains cristallins de Si présentant un diamètre de particule de 1 nm à 15 nm, calculé par analyse par diffraction des rayons X (DRX).

7. Procédé de préparation de matériau actif d'électrode négative comprenant des particules d'oxyde à base de silicium selon l'une quelconque des revendications 1 à 6, le procédé comprenant :
former une première couche de revêtement qui est une couche de carbone sur des particules d'oxyde à base de silicium ;
doper au Li les particules d'oxyde à base de silicium sur lesquelles la première couche de revêtement est formée ;
éliminer, par gravure, le silicate de lithium (Li-silicate) formé par un oxyde à base de silicium et du Li sur les particules d'oxyde à base de silicium sur lesquelles la première couche de revêtement est formée ; et
former une deuxième couche de revêtement qui est une couche de carbone sur les particules d'oxyde à base de silicium sur lesquelles la première couche de revêtement gravée est formée.

8. Procédé selon la revendication 7, dans lequel la gravure est réalisée en utilisant NaOH, HF ou KOH.

9. Pâte d'électrode négative comprenant le matériau actif d'électrode négative selon l'une quelconque des revendications 1 à 6.

10. Électrode négative comprenant le matériau actif d'électrode négative selon l'une quelconque des revendications 1 à 6.

11. Batterie secondaire comprenant l'électrode négative selon la revendication 10.
